# EUROPEAN PATENT APPLICATION

(11) **EP 0 827 356 A2**
(43) Date of publication of application: **04.03.1998**
(21) Application number: 97660092.4
(22) Date of filing: 25.08.1997
(51) Int. Cl.: H04Q 7/38, H04Q 7/32

(54) **A protection method in a mobile communication system**

(30) Priority: 02.09.1996 FI 963428
(71) Applicant: NOKIA MOBILE PHONES LTD., 02150 Espoo (FI)
(72) Inventor: Hietalahti, Hannu, 90810 Kiviniemi (FI)
(74) Representative: Brax, Matti Juhani

(57) **Abstract**

A protection method according to the present invention in a mobile communication system is characterized in that it includes an authentication procedure, which is initiated by mobile equipment (MS) independently of a network (NETWORK), which is controlled by the mobile equipment, and in which a decision to set up a connection is made in the mobile equipment. The mobile equipment generates a random number (RAND3) and signals (31) it to the network. Then, both the mobile equipment and the network use an authentication algorithm (32a, 32b) to calculate corresponding results (MSARD, NETRD) from the random number (RAND3) and an authentication code (A-KEY). The network signals (33) its result (NETRD) to the mobile equipment, in which the results are compared with each other (34), and a decision is made regarding formation of a connection. The protection method also advantageously includes an authentication procedure accordinq to the prior art, controlled by the network, for the purpose of verifying the right of the subscriber to use the network.

## Description

The present invention relates to a protection method in a mobile communication system, and particularly a protection method in which an authentication procedure may be performed.

Good protection is thought to be one of the major benefits of new mobile communication systems, such as GSM. Authentication, ciphering and protection of the subscriber's identity are the basic features of protection. To these may be added verification of the identity of mobile equipment by a network.

The main purpose of authentication is to verify that a user is a registered subscriber with the right to use a system. Authentication is based on a ciphered code, which is located in a subscriber's SIM module on the one hand, and in a network as subscriber-specific data in a home location register on the other hand. Said ciphered code is never transmitted using radio or other network connections, and it is practically impossible to intercept the code. Therefore, it has also been held nearly impossible to penetrate the protection provided by authentication. Certain known authentication procedures are examined in more detail later.

In new mobile communication systems, ciphering of data or speech is usually realized in the same manner as authentication, by means of ciphered information, a ciphering key, stored in a subscriber's SIM module or similar device on the one hand, and in the subscriber's home location register in a network on the other hand. Ciphering is not enabled while a connection is being set up, but normally it is enabled before any data, such as speech, is transmitted. To prevent a subscriber's location from being identified by listening to control channels during the set-up phase, when ciphering is not yet enabled, a temporary mobile subscriber identity, which is assigned to the subscriber by the network while the subscriber's location is being registered, is used for signalling in place of the international mobile subscriber identity.

In said GSM system, for example, ciphering is carried out in a subscriber-initiated call as follows. After identifying the subscriber, the network sends an authentication request and checks the response received from the mobile station. Next, the network checks the identity of the mobile station. Then, ciphering is normally enabled by means of signalling begun by a command from the network. Once the ciphering is enabled, formation of an actual communication connection is started, and reception of ciphered speech or data begins when the connection is made. It should be noted that all the protective measures mentioned above are typically controlled by the network in a digital mobile communication system, and the network makes decisions regarding the measures. Furthermore, they are optional measures, which the network may skip and still set up a connection.

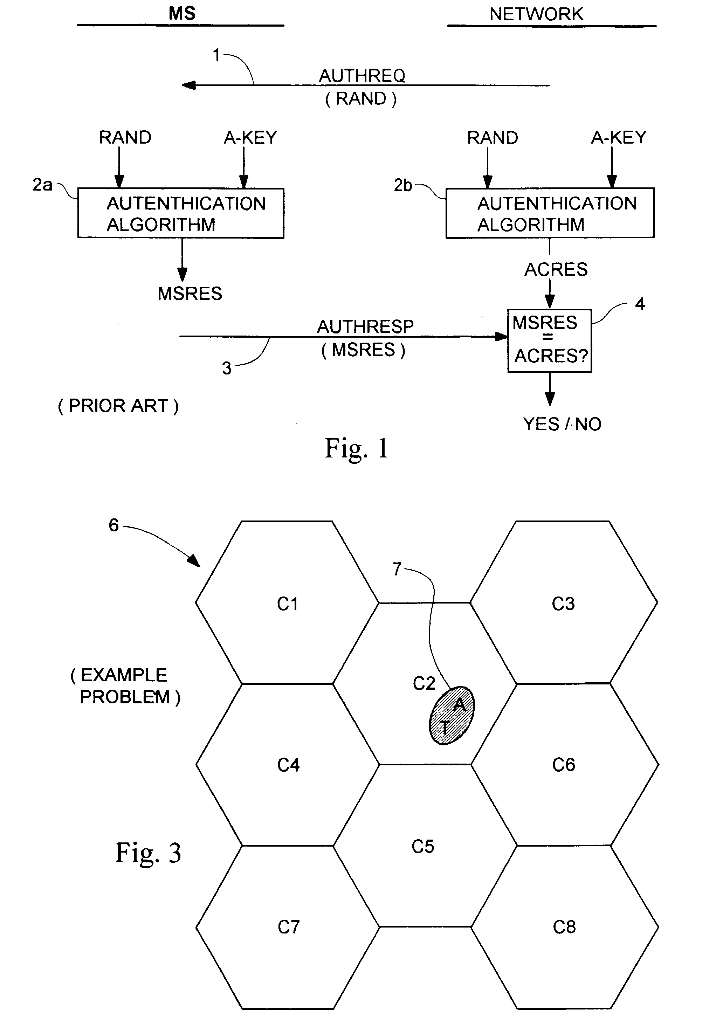

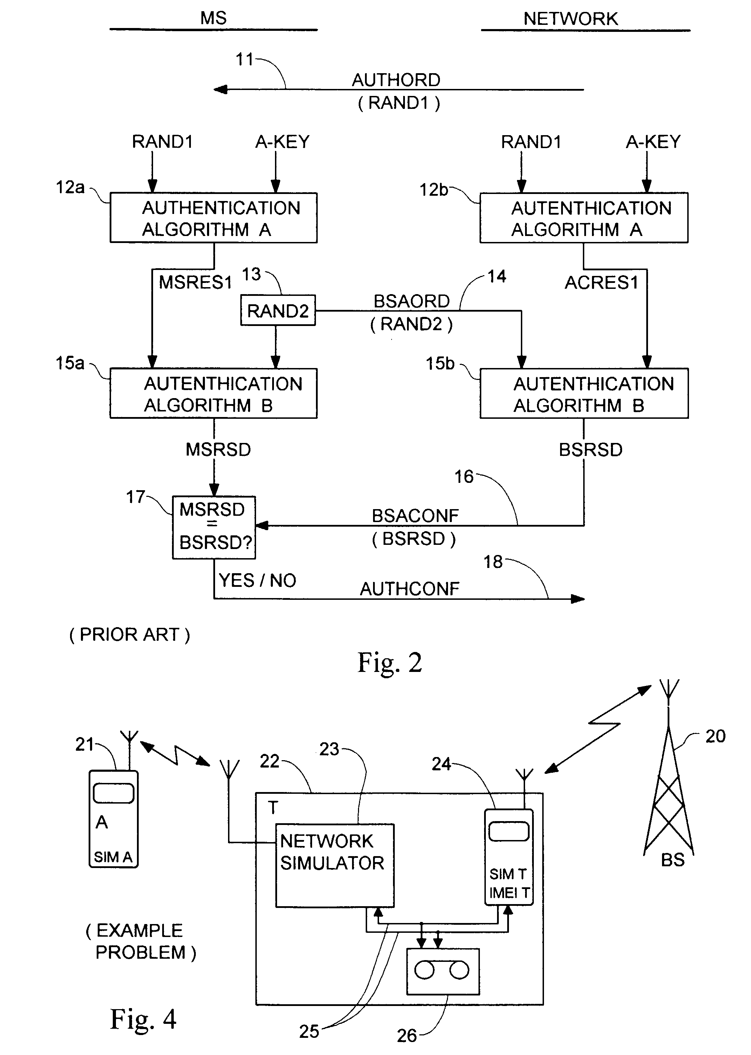

Two known authentication procedures are examined in the following with references to figures 1 and 2. Figure 1 presents a diagram of a procedure similar to that used in the GSM system, for example, and figure 2 presents a diagram of a procedure similar to that used in the American IS-136 system. The names of the signals, data fields, numbers, calculation results, etc. in the diagrams are not names that are used in any system, but rather they are suitable names chosen for explanatory purposes. In the diagrams of figures 1 and 2, the top left side labeled MS represents a mobile subscriber and mobile equipment, and the top right side labeled NETWORK represents a mobile communication network. In the example of figure 1, authentication is started by means of an authentication request message AUTHREQ indicated by reference number 1, sent by the network. The message includes a random number RAND, shown in parentheses below the name of the message. An authentication code or key A-KEY is stored in the SIM card in the mobile equipment. The same code and other data related to the subscriber are stored in the network, where they are available to the subscriber's home location register and an authentication center. Identical authentication algorithms, correspondingly 2a and 2b, are realized in both the mobile subscriber's SIM card and the mobile communication network. Said random number RAND and authentication key A-KEY are entered into both authentication algorithms. By means of the algorithm, a result MSRES is obtained on the subscriber side and a result ACRES on the network side. An authentication response message AUTHRESP, which is indicated by reference number 3 and includes said result MSRES in its data field, is sent by the mobile equipment. The obtained results MSRES and ACRES are compared on the network side in a manner indicated by reference number 4, and the subscriber authentication is successful if the results are the same. If the results are not the same, the network may disconnect the connection set-up.

In figure 2, in the simplified presentation of an authentication process similar to that used in an IS-136 system, authentication also begins with an authentication command AUTHORD sent by the network side, indicated by reference number 11 and including a random number RAND1. In the same manner as described in the above method, said random number and the authentication key A-KEY of said subscriber are entered into authentication algorithms, correspondingly 12a and 12b, on both the mobile subscriber side and the network side. Equivalent results are obtained, MSRES1 on the subscriber side and ACRES1 on the network side. Furthermore, a second authentication algorithm B exists on the both subscriber and network sides, correspondingly 15a and 15b, into which said results MSRES1 and ACRES1 are entered. Additionally, a second random number RAND2 is generated on the mobile subscriber side in the manner indicated by reference number 12. Said second random number is sent to the network side in a message BSAORD, which is indicated by reference number 14. This random number is entered into algorithm B together with the result obtained from algorithm A, correspondingly MSRES1 and ACRES1. Results are obtained from algorithm B on the subscriber and network sides, correspondingly MSRSD and BSRSD, and the result obtained on the network side is sent to the mobile equipment side in a message BSACONF. The results MSRSD and BSRSD are compared on the mobile equipment side in the manner indicated by reference number 17, and the result of the comparison, data that indicates successful or unsuccessful authentication, is sent to the network in an authentication confirmation message AUTHCONF, indicated by reference number 18.

An example of a problem is presented in the following, with references to figures 3 and 4, which is an example of a system which may apparently be used to penetrate the protection in a mobile communication system that uses authentication methods according to the prior art. The example is not only theoretical, but rather it may be deduced from certain publicly presented information that this type of arrangement has already been realized. The arrangement is based on the creation of a false cell.

Figure 3 presents a diagram of a typical cell structure 6 of a mobile communication system, including cells C1 ... C8. Reference number 7 indicates a false cell created inside a cell C2, in which T is the false cell's station, which represents a base station or a network, and A is a mobile subscriber that will be tapped.

Figure 4 presents the imagined tapping arrangement T in more detail, indicated by reference number 22. The arrangement includes a network simulator 23 and ordinary mobile equipment 24. Said mobile equipment operates in a mobile communication system and contains a SIM module SIM T belonging to a registered subscriber, and a valid equipment identity IMEI T. The network simulator may be a device intended for development and testing, for example, which simulates a mobile communication network and which is available from manufacturers of data communication instruments. The network simulator 23 is connected to the mobile equipment 24 by means of a connection 25. Said network simulator may be replaced by another similar device, such as base station equipment of said mobile communication system, modified for this purpose, or a protocol adapter suitable for this purpose.

The arrangement 22 may be used as follows. It is set up to appear as a neighboring cell of cell C2, advantageously a sufficiently distant neighbor, such as cell C8 or C1. Then, the field strength of this false cell T is maintained stronger than the field strength of authentic network cells detected by mobile equipment A, which will be tapped. When mobile equipment A begins to set up a connection for a call or a data transmission, the most powerful base station, false cell T, receives a request for a channel. It is characteristic of a digital mobile communication system that the network controls events after the first signals have been exchanged.

Therefore, the network simulator may simply skip authentication or perform the signalling required for authentication and continue setting up the connection as if authentication were successfully completed. The network simulator may also disable ciphering. This ensures that a connection is made between the arrangement 22 and the mobile station 21, and that unciphered speech or data is transmitted by means of said connection.

In relation to the real mobile communication network, arrangement 22 appears and functions as mobile equipment by using and posing as mobile equipment 24. The network simulator or equivalent device 23 functions as a protocol adapter, and the mobile station 24 forms a connection to the location in the real network that subscriber A wishes to be connected to. The real network performs authentication and other protective measures through base station 20 by communicating with mobile station 24. No problems arise because mobile station 24 is a device that is approved in the system and operated by a registered subscriber. Subscriber T is authenticated and ciphered speech or data is transmitted and received along a connection made between the network base station 20 and the device 24. Speech or data received by mobile station 24 is deciphered, therefore unciphered data is transmitted in both directions along the connection between the network simulator 23 and the mobile station 24. Therefore, it is easy to listen to, or it may be recorded on a tape recorder 26, for example.

All in all, subscriber A, or mobile equipment 21, only communicates with the false station 22, or station T, and not with the real network. On the other hand, the network only sees an ordinary connection to subscriber T and the mobile equipment 24 operated by said subscriber. It should be noted that, without the knowledge of subscriber A, false station 22 is also capable of making a connection elsewhere than to a place where subscriber A wishes, which increases the possibilities of misuse. Furthermore, as soon as a dedicated channel is indicated, false base station 22 may ensure that the connection is preserved, for example, by sending mobile station 21 a list of neighbors that contains no neighbors. A connection to the false base station is preserved even though the field strength becomes weak, because the mobile equipment does not know of any alternative neighbors.

The purpose of the present invention is to produce a protection method that eliminates the problems described above, or other similar problems.

To achieve said purpose, a protection method according to the present invention in a mobile communication system, where connections are set up between mobile equipment operated by a subscriber, and a network, and where:
the subscriber has a ciphered authentication code, which is known by the mobile equipment on the one hand and by the network on the other hand, and
an authentication procedure may be performed in which the equivalence of the ciphered codes known by the mobile equipment and the network is verified, and a decision to set up a connection is based on said verification,
is characterized in that said method includes an authentication procedure
which the mobile equipment initiates independently of the network,
which is controlled by the mobile equipment,
and in which a decision to set up a connection is made by the mobile equipment.

An advantageous embodiment of the protection method according to the present invention includes steps in which:
the mobile equipment generates a random number and signals it to the network,
both the mobile equipment and the network use the ciphered code and the random number to calculate corresponding resulting numbers,
the network signals its resulting number to the mobile equipment and
the resulting numbers are compared and the decision to set up a connection is made in the mobile equipment, based on the comparison.

In an advantageous embodiment of the present invention, the protection method also includes an authentication procedure, which is controlled by the network, and in which the network makes the decision to set up a connection.

The present invention and certain of its embodiments are described below in more detail, with references to the enclosed drawings.
Figure 1 presents a diagram of an authentication procedure according to the prior art,
Figure 2 presents a simplified diagram of another authentication procedure according to the prior art,
Figures 3 and 4 diagrammatically present an example of a problem; an example of an arrangement which may penetrate protection provided by authentication procedures of the prior art, and
Figure 5 presents a diagram of an embodiment of a protection method according to the present invention.

The prior art presented by figures 1 and 2 and an example problem illustrated by figures 3 and 4 are explained above in detail.

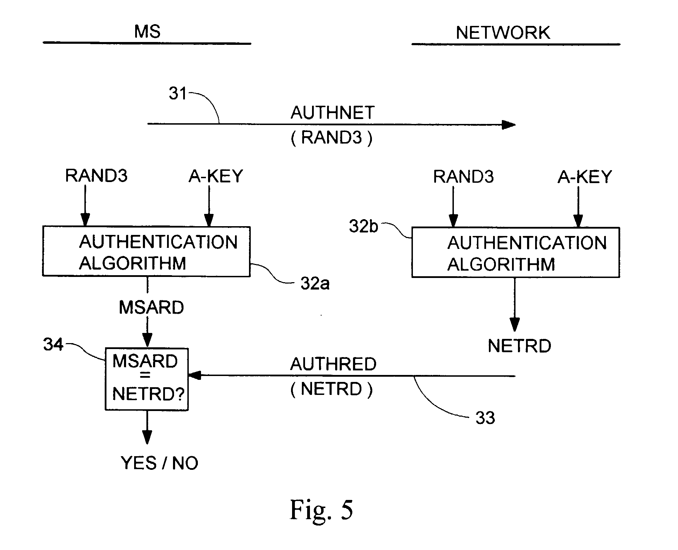

An embodiment of an authentication procedure belonging to a protection method according to the present invention is explained below with references to figure 5. As shown by reference number 31, the procedure begins when mobile equipment MS sends a request for authentication to a network NETWORK, a message that includes a random number RAND3 generated in the mobile equipment. In both the mobile equipment and the network, identical authentication algorithms, correspondingly 32a and 32b, are used to calculate equivalent results MSARD and NETRD from the random number and the subscriber's authentication code or key A-KEY, which is known by both. Then, the network sends a response message AUTHRED, indicated by reference number 33, which includes the result NETRD in its data field. The results MSARD and NETRD are compared with each other in the mobile equipment, as indicated by reference number 34. Authentication is successful if the results are the same, and the mobile equipment procedes to make a connection. If the results are not the same, the mobile equipment may decide to interrupt connection-making.

It is essential and important in the authentication procedure according to the present invention that the mobile equipment initiates the authentication, independently of the network, and also controls the entire procedure, finally making a decision whether or not to continue making the connection, based on the result of the authentication. Authentication may be advantageously performed using a subscriber-specific authentication code, which naturally is originally intended to ensure that the subscriber is registered and has the right to use the network. In the procedure according to the present invention, the mobile equipment uses the same code to verify that it is truly communicating with a real network, i.e., a network that has the subscriber's identifying information, including an authentication code or key. This prevents penetration of the protection in the manner illustrated in the example problem above, in which the network also controls performance of the protection method, whereupon it becomes possible to use a false network.

It should be noted that the authentication procedure according to the present invention only guarantees that the network is real. Verification of the user rights of the subscriber also requires authentication controlled by the network side. Therefore, the protection method according to the present invention advantageously also includes a network-controlled authentication procedure, which may be an authentication according to the prior art (e.g., as shown in figure 1), for example, performed before or after the authentication controlled by the mobile equipment.

Naturally, the present invention is not limited to the embodiments described above, but rather it may vary within the scope of the enclosed claims.

## Claims

1. A protection method in a mobile communication system, where connections are set up between mobile equipment (MS) operated by a subscriber, and a network (NETWORK), and where:
the subscriber has a ciphered authentication code (A-KEY), which is known by the mobile equipment on the one hand, and by the network on the other hand, and
an authentication procedure may be performed in which the equivalence of the ciphered codes known by the mobile equipment and the network is verified, and a decision to set up a connection may be made based on said verification,
is **characterized** in that said method includes an authentication procedure
which the mobile equipment (MS) initiates independently of the network (NETWORK),
which is controlled by the mobile equipment,
and in which a decision to set up a connection is made in the mobile equipment.

2. The protection method according to claim 1,
**characterized** in that the protection method includes phases in which:
the mobile equipment (MS) generates a random number (RAND3) and signals (31) it to the network (NETWORK),
both the mobile equipment and the network use the ciphered code (A-KEY) and the random number (RAND3) to calculate (32a, 32b) corresponding resulting numbers (MSARD, NETRD),
the network signals (33) its resulting number to the mobile equipment and
the resulting numbers are compared with each other (34) and the decision to set up a connection is made in the mobile equipment, based on the comparison.

3. The protection method according to claim 1 or 2,
**characterized** in that it also includes an authentication procedure (figure 1), which is controlled by the network (NETWORK) and in which the network makes the decision to set up a connection.
